# EUROPEAN PATENT SPECIFICATION

(11) **EP 3 892 925 B1**
(45) Date of publication and mention of the grant of the patent: **14.02.2024**
(21) Application number: 20168701.9
(22) Date of filing: 08.04.2020
(51) Int. Cl.: F24D 19/10, F24D 11/02, F24D 17/02, F28D 20/00

(54) **A HEATING SYSTEM, A METHOD, A COMPUTER PROGRAM, A COMPUTER-READABLE MEDIUM AND A CONTROL DEVICE**
HEIZSYSTEM, VERFAHREN, COMPUTERPROGRAMM, COMPUTERLESBARES MEDIUM UND STEUERVORRICHTUNG
SYSTÈME DE CHAUFFAGE, PROCÉDÉ, PROGRAMME INFORMATIQUE ET SUPPORT LISIBLE PAR ORDINATEUR, ET DISPOSITIF DE COMMANDE

(43) Date of publication of application: 13.10.2021
(73) Proprietor: Vattenfall AB, 169 92 Stockholm (SE)
(72) Inventor: WOLFSWINKEL, Wouter, 1019AW Amsterdam (NL); DE GRAAFF, Ramon, 1218EB Hilversum (NL)
(74) Representative: Zacco Sweden AB

(56) References cited:
- EP-A1- 2 249 098
- WO-A2-2014/072512
- DE-U1-202010 013 659
- US-A1- 2005 022 542

## Description

### TECHNICAL FIELD

The present invention relates to a heating system configured to be connected to a heating distribution system of a building. The invention also relates to method for controlling such a heating system. The invention further relates to a computer program, a computer-readable medium, a control device and a use of such a heating system.

### BACKGROUND

Heating of buildings, such as dwellings, consumes large amounts of energy, especially during the winter. This is especially cumbersome for less insulated housings, and causes economical strain as well as serious environmental concerns. Many residential building are still heated by fossil fuels, such as coal, oil or gas, which are non-renewable energy sources. Heating systems powered by fossil fuel also causes emissions that may contribute to climate change, which is one of the biggest challenges of our time. Thus, in order to enable fossil free living going forward, transition has to be made. One way to reduce the consumption and dependence on fossil fuels is to use heat pumps for heating of individual buildings. By means of using heat pumps, the environmental footprints can be heavily reduced compared to older solutions for heating, such as using gas boilers. However, there are still improvements to be made relating to finding more cost-effective and energy efficient ways to heat buildings, especially for already existing buildings. Great opportunities to take important transition steps to reduce greenhouse gas emissions and energy use can be implemented when existing buildings and heat systems have to be renovated. Thus, it is of utter importance to be able to offer climate effective solutions, which are also energy- and cost-efficient for enabling modification of existing homes to climate sustainable homes.

One known solution for a heating system for a building comprising a heat pump is disclosed in document WO 2011148102 A2. The document describes a solution for heating and/or production of sanitary hot water by means of a heat pump and buffer system. Document WO 2014/072512 A2 discloses a heating system according to the preamble of claim 1.

### SUMMARY OF THE INVENTION

An object of the present invention is to achieve an advantageous heating system configured to be connected to a heating distribution system of a building. Another object of the invention is to reduce the consumption and dependence on fossil fuels for heating of a building. A further object of the invention is an energy- and cost-efficient solution for heating of a building.

Further objects of the invention is to achieve a new and advantageous method, control device, computer program and computer-readable medium and use of a heating system.

The herein mentioned objects are achieved by:
- a heating system configured to be connected to a heating distribution system of a building,
- a method, performed by a control device, for controlling such a heating system,
- a computer program, a computer-readable medium and a control device, according to the independent claims.

Hence, according to an aspect of the present invention, a heating system configured to be connected to a heating distribution system of a building, is defined in claim 1.

The heating system comprises:
a heat pump arrangement configured to heat a fluid; a stratified heat storage device configured to store the fluid at differentiated temperatures, wherein the heat storage device is arranged in fluid connection with the heat pump arrangement; a mixing arrangement arranged in fluid connection with the heat storage device and the heating distribution system; and a control device for controlling the heating system. The heat pump arrangement is configured to supply outgoing fluid to the heat storage device and to subtract ingoing fluid from the heat storage device, and the heat storage device is configured to supply fluid via the mixing arrangement to the heating distribution system and to receive returning fluid from the heating distribution system. The mixing arrangement is configured to subtract fluid from the heat storage device and to regulate the temperature of the fluid entering the heat distribution system and control the temperature of the returning fluid from the heating distribution system. The heat pump arrangement is configured to supply the outgoing fluid to the heat storage device at an outgoing temperature of at least 55°C, wherein an ingoing temperature of the ingoing fluid subtracted from the heat storage device by the heat pump arrangement is at least 20°C lower than the outgoing temperature of the outgoing fluid from the heat pump arrangement.

According to another aspect of the present invention, a computer-implemented method, performed by a control device, for controlling a heating system configured to be connected to a heating distribution system of a building is defined in claim 4. The heating system comprises a heating arrangement, a stratified heat storage device arranged in fluid connection with a mixing arrangement and the heating distribution system. The method comprises the steps of: heating of a fluid by a heating arrangement and storing of the fluid at differentiated temperatures in the stratified heat storage device; regulating, in the mixing arrangement, the temperature of the fluid entering the heating distribution system; controlling, using the mixing arrangement, the return of the returning fluid from the heating distribution system to the heat storage device based on temperature values of the returning fluid provided by a returning fluid temperature sensor arranged downstream of the heating distribution system, to ensure that the temperature difference within the heat storage device is at least 10°C.

According to another aspect of the present invention, a computer program comprising instructions which, when the computer program is executed by a computer, cause the computer to carry out the method as disclosed herein is provided.

According to another aspect of the present invention, a computer-readable medium comprising instructions, which when executed by a computer, cause the computer to carry out the method as disclosed herein is provided.

According to another aspect of the present invention, a control device for controlling a heating system configured to be connected to a heating distribution system of a building is provided. The control device is configured to perform the method as disclosed herein.

Today, there are different ways to reduce the energy consumption and dependence on fossil fuels relating to heating of a building. New buildings may be designed as passive houses, while older buildings often is modernised by adding insulation and/or exchanging the heat source. For existing buildings, a natural moment to choose a more sustainable source of heating, such as a heat pump, is when the existing heat source has to be replaced. Generally, existing heating solutions in privates homes and individual building are only replaced when an irreparable defect in the existing heating solution occurs. Then, a new heating device has to be installed immediately, since the residents are dependent on the supply of heat in their homes. It is thus essential that the new heating solution is quick to install, without requiring excessive and expensive modifications of the dwelling.

Many of the existing buildings, in e.g. the Netherlands, Belgium and the United Kingdom, are not suitable for the current generation heat pumps with synthetic refrigerants, such as HFK and (H)CFK. Especially dwellings from the post-war building period until the change of the century, with little to no insulation measures, appear to be unsuitable for the current generation of heat pumps with synthetic refrigerants. In such buildings, the heating distribution system often comprises radiators designed to operate at high temperatures, which exceed the temperatures that a heat pump with synthetic refrigerant can deliver. Thus, a HFK heat pump cannot reach the necessary temperature levels to effectively heat such a dwelling. Common retrofit insulation measures, such as implementing floor insulation, cavity wall insulation and high efficiency glass (HR++), are often insufficient to reduce the total heat demand and to reduce the peak heat demand to a level that a heat pump comprising synthetic refrigerant is able to supply.

Thus, major, expensive and time-consuming preparatory measures are often necessary to make an existing residence suitable for the low temperatures and capacity supplied by heat pumps with synthetic refrigerant. The significant modifications needed, high costs and time delays involved creates resistance to implement new sustainable technology. Since the existing heating solution within a building is only modernised every 12 to 20 years, it is important to offer attractive solutions in order to smoothen the energy transition and increase the speed of phasing out the use of fossil fuel. Thus, there is need for an affordable and directly replaceable heating option that makes it possible to immediately exchange a current heating solution in an existing home without the above-mentioned and expensive measures. It is crucial that there is a good match between the heating system and the building's current heat distribution system characteristics, such as the required heating temperature in the distribution system. In addition, it is important to enable increased capacity at peak demands.

By means of the present invention, energy efficient and cost-effective heating of a building is obtained. In addition, the dependency on fossil fuel may be reduced. The present disclosure enables the use of a sustainable source of heating even for less well-insulated dwellings requiring high temperature output. A direct replacement retrofitting option is achieved, which enables a fast and reliable upgrade of older heating solutions to a new generation of sustainable heating solutions, which meets today's high standards in regards to reducing pollution of the environment. Thus, the present invention facilitates modification of energy-intensive homes to climate sustainable homes.

By having a stratified heat storage device in the heating system according to the present invention, a relatively high temperature difference between the outgoing fluid from the heat pump arrangement and the ingoing fluid to the heat pump arrangement is obtained. The relatively high temperature difference in turn enables the use of a heat pump arrangement being able to deliver a high temperature output. This is an essential difference compared to commonly used domestic heat pumps, such as HFK heat pumps, which often operates with an output temperature of about 35-50°C and with a temperature difference of about 5-10°C between the ingoing and outgoing fluid. Thus, the present invention enables new and advantageous applications where the use of heat pumps have not been an option before, such as less insulated buildings requiring high temperature output. Consequently, the environmental footprint relating to heating of such a building is reduced.

One specific application where the invention of a heating system as described herein is suitable, is for the replacement of a condensing gas boiler in an existing building comprising an existing heat distribution system for a fluid. Condensing gas boiler are common in e.g. the Netherlands, in both older and less insulated buildings as well as in new and well insulated buildings, using heat distribution systems comprising of high temperature radiators.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention that is defined in the appended claims.

### BRIEF DESCRIPTION OF THE DRAWINGS

For better understanding of the present invention and further objects and advantages of it, the detailed description set out below should be read together with the accompanying drawings, in which the same reference notations denote similar items in the various drawings, and in which:
- Figure 1: schematically illustrates a heating system according to an example;
- Figure 2: schematically illustrates a heating system according to an example;
- Figure 3: schematically illustrates a block diagram of a method for controlling a heating system according to an example; and
- Figure 4: schematically illustrates a control device or computer according to an example.

### DETAILED DESCRIPTION

To increase the energy efficiency and cost-effectivity while reducing the dependency on fossil fuel, a heating system, a method, a computer program, a computer-readable medium, a control device according to the present invention have been developed.

The heating system will be described in further detail below. It is understood that all the various examples of the heating system also applies for the method, the computer program, the computer-readable medium, the control device as disclosed herein.

Hence, according to an aspect of the present invention, a heating system configured to be connected to a heating distribution system of a building, is provided. The heating system comprises:
a heat pump arrangement configured to heat a fluid; a
stratified heat storage device configured to store the fluid at differentiated temperatures, wherein the heat storage device is arranged in fluid connection with the heat pump arrangement; a mixing arrangement arranged in fluid connection with the heat storage device and the heating distribution system; and a control device for controlling the heating system. The heat pump arrangement is configured to supply outgoing fluid to the heat storage device and to subtract ingoing fluid from the heat storage device, and the heat storage device is configured to supply fluid via the mixing arrangement to the heating distribution system and to receive returning fluid from the heating distribution system. The mixing arrangement is configured to subtract fluid from the heat storage device and to regulate the temperature of the fluid entering the heat distribution system and control the returning fluid from the heating distribution system based on temperature values of the returning fluid provided by a returning fluid temperature sensor arranged downstream of the heating distribution system. The heat pump arrangement is configured to supply the outgoing fluid to the heat storage device at an outgoing temperature of at least 55°C, wherein an ingoing temperature of the ingoing fluid subtracted from the heat storage device by the heat pump arrangement is at least 20°C lower than the outgoing temperature of the outgoing fluid from the heat pump arrangement.

The building may be an existing building or a new building being constructed. The heat distribution system may comprise a least one fluid circuit. The fluid circuit may comprise multiple radiators, such as panel and bathroom radiators, floor heating and/or other types of devices needed to be heated. According to an example, the fluid comprises water. The fluid may comprise water comprising additives, such a glycol. According to a specific example, the fluid is water. Water is a cost-effective and highly available fluid with suitable thermodynamic properties for heating of buildings. According to other examples, the fluid may comprise oil, or any other fluid with suitable thermodynamic properties for the current application.

The heat pump arrangement may comprise at least one heat pump. The term "heat pump" may herein refer to an electrically driven compression heat pump. The at least one heat pump may be a conventional heat pump comprising components such as a compressor, a condenser or a gas cooler, an expansion valve and an evaporator. These components may be connected to each other via a refrigeration circuit. A refrigerant circulates in the refrigeration circuit. The refrigerant may comprise asuitable type of refrigerant, such as propane, ammonia or CO₂. Energy for the refrigerant may be collected from external air. A centrifugal fan may be used to provide air flow. Thus, according to an example, heat pump arrangement comprises an air-to-water heat pump. Air-to-water heat pumps are energy-efficient and cost-effective devices that uses heat in the ambient air for heating of water. The at least one heat pump may be arranged outside, i.e. placed on the outside of the dwelling. The heat pump arrangement may be connected to a heat storage device, which may be fitted inside the dwelling. According to specific examples, the heat pump arrangement may comprise a 6kW monoblock CO₂ air-to-water heat pump from Denso^{®} and the heat storage device may comprise a 230-litre stratified storage tank from Solvis^{®} (Solvis BEN Solo, 230L). However, the dimensioning of the capacity of the heat pump arrangement and the heat storage device may be based on the type and size of the building as well as depend on other specific requirement of the heating system. For example, not only space area may be heated by means of the heating system, but also domestic hot water. According to examples, the heat storage device may be configured to store a fluid of between 100 to 3000 litres, or 150 to 2500 litres, or 200 - 2000 litres.

The stratified heat storage device is configured to store the fluid at differentiated temperatures by means of thermal layering. The density of a fluid, such as water, is a function of its temperature. When water is warmer than 4°C, it gets less dense for each increment in degree Celsius. This allows for thermal layering; where warmer water is stored on top of colder water, which is defined as "thermal stratification". Since warmer water will be lighter and colder water will be heavier, there will always be a level of "self-induced" thermal stratification in a water storage. The efficiency of the stratification, i.e. the thermal layering of the fluid, may be improved by the design of the vessel storing the fluid as well how and where the fluid is introduced and withdrawn from the heat storage device. For example, the heat storage device may comprise a stratifier inlet device which improves the thermal stratification by discharging the returning fluid into the stratified storage device at differentiated temperatures.

In the present invention, "in fluid connection" means that the components are fluidly connected. This means that the components are interconnected by means of a circuit of the fluid. The components in fluid connection may be interconnected by e.g. pipes and tubes. Additional components, such as valves, sensors etc. may be arranged in between two components in fluid connection.

The heat storage device is arranged in fluid connection with the heat pump arrangement so that outgoing fluid from the heat pump arrangement may be transferred to the heat storage device while ingoing fluid to the heat pump arrangement may be transferred from the heat storage device. The outgoing fluid from the heat pump arrangement may thus be relatively warm. However, due to the thermal stratification in the heat storage device, the ingoing fluid going back into the heat pump arrangement may be relatively cool.

The mixing arrangement may regulate the temperature of the fluid entering the heating distribution system by mixing fluids of different temperature. The temperature delivered by the heating distribution system to the building may thus be regulated by means of the mixing arrangement. This means that the temperature of the space heated by the heating distribution system is thus affected. The mixing arrangement may comprise a mixing valve and a circulation pump. The mixing valve and the speed of the circulation pump may be controlled on the basis of temperature sensors arranged within the heating system. A mixing arrangement temperature sensor may be arranged downstream of the mixing valve in order to provide direct feedback of the current mixing. Thus, the mixing arrangement temperature sensor may be used to control the mixing position of mixing valve, in order to regulate the temperature of the fluid entering the heat distribution system.

The fluid subtracted from the heat storage device to the mixing arrangement may be withdrawn from different thermal layers in the heat storage device. According to an example, the fluid subtracted from the heat storage device to the mixing arrangement may comprise a top section fluid and a midsection fluid, wherein the top section fluid is subtracted from a top section of the heat storage device and the midsection fluid is subtracted from the midsection of the heat storage device. The midsection of the heat storage device is arranged between the top section and a bottom section of the heat storage device. The top section fluid may be warmer than the midsection fluid. The different temperatures of the fluid thus depend on the thermal stratification in the heat storage device and from which thermal layer the fluid is withdrawn. In the mixing arrangement, the top section fluid and the midsection fluid may also be mixed with returning fluid from the heat distribution system. Due to the mixing of fluids at different temperatures in the mixing arrangement, the temperature of the fluid entering into the heating distribution system may be regulated. A returning fluid temperature sensor is arranged downstream of the heat distribution system. The returning fluid temperature sensor monitors the temperature of the returning fluid from the heating distribution system. The mixing valve and the speed of the circulation pump may be controlled on the basis of the returning fluid temperature sensor.

Depending on the temperature of the returning fluid, the returning fluid may be reused for further heating of the heating distribution system. In such case the returning fluid may at least partly be withdrawn back to the mixing arrangement. If not withdrawn back to the mixing arrangement, the returning fluid returns to the heat storage device. The return of the returning fluid may be controlled by e.g. adjusting the fluid flow through the heating distribution system and/or withdrawing at least a part of the returning fluid back to the mixing arrangement. The fluid flow may be adjusted by means of altering the circulation pump speed and the amount of returning fluid going back to the mixing arrangement depends on the regulation of the mixing valve.

By controlling the temperature of the returning fluid from the heating distribution system to the heat storage device, efficient thermal stratification within the heat storage device may be maintained. According to the invention, the temperature difference within the heat storage device is at least 10°C. According to further embodiments, the temperature difference within the heat storage device is at least 15°C, or 20°C, 25°C, or 30°C, or 35°C, or 40°C, or 45°C, or 50°C. From the heat storage device, ingoing fluid to the heat pump arrangement may be subtracted. The fluid having the lowest temperature in the heat storage device will be accommodated at the bottom section of the heat storage device. Thus, the ingoing fluid to the heat pump arrangement may be subtracted from the bottom section of the heat storage device. The fluid arranged in the bottom section may be referred to as bottom section fluid. Thereby, it is assured that the temperature of the ingoing fluid to the heat pump arrangement is significantly lower than the temperature of the outgoing fluid from the heat pump arrangement.

The heat pump arrangement supplies the outgoing fluid to the heat storage device at an outgoing temperature of at least 55°C, which is a relatively high output temperature compared to many other commonly used domestic heat pump arrangement. According to examples, the heat pump arrangement is configured to supply outgoing fluid to the heat storage device at a temperature of at least 60°C, or at least 65°C, or at least 70°C, or at least 75°C, or at least 80°C, or at least 85°C, or at least 90°C. Due to such high output temperature, buildings requiring high temperature output can be heated. However, a heat pump arrangement having such high output temperature may demand a high differential of outgoing and ingoing temperature in order to operate. The differential temperature needed for enabling operation of the heat pump arrangement is achieved by means of the implementation of the stratified heat storage device and the mixing arrangement in the heating system. These features and their configuration enable that the ingoing temperature of the ingoing fluid returning to the heat pump arrangement is at least 20°C lower that the outgoing temperature of the outgoing fluid from the heat pump arrangement. This means that the temperature difference between the outgoing fluid from the heat pump arrangement and the ingoing fluid to the heat pump arrangement is at least 20°C. According to an example, the ingoing temperature of the ingoing fluid to the heat pump arrangement is at least 30°C lower that the outgoing temperature of the outgoing fluid from the heat pump arrangement. According to other examples, the ingoing temperature of the ingoing fluid to the heat pump arrangement is at least or 25°C, or 35°C, or 40°C, or 45°C, or 50°C, or 55°C, or 60°C, or 65°C, or 70°C, or 75°C lower that the outgoing temperature of the outgoing fluid from the heat pump arrangement. The efficiency of the heat pump arrangement may increase with an increased temperature difference.

The heating system is controlled by a control device. The configuration of the control device combined with the hydraulic properties of the heating system makes it possible to guarantee the optimum working conditions of the heat pump arrangement and at the same time supply the required heating to the heating distribution system at any time. Thereby increased cost- and energy efficiency is achieved.

According to an example, the heat storage device may comprise at least one temperature sensor. For example, the heat storage device may comprise a top section temperature sensor arranged at the top section of the heat storage device, and a bottom section temperature sensor arranged at the bottom section of the heat storage device. The bottom section temperature sensor may monitor the temperature of the bottom section fluid. In between the top section temperature sensor and the bottom section temperature sensor, at least one intermediate temperature sensor may be arranged. These temperature sensors may be used for monitoring and controlling the temperature distribution within the heat storage device. A midsection fluid temperature sensor may be arranged between the heat storage device and the mixing arrangement in order to monitor the temperature of the midsection fluid subtracted by the mixing arrangement from the heat storage device. An ingoing fluid temperature sensor may be configured to monitor the ingoing temperature of the ingoing fluid subtracted from the heat storage device by the heat pump arrangement. An outgoing fluid temperature sensor may be configured to monitor the outgoing temperature of the outgoing fluid from the heat pump arrangement.

When the heating system is operating, the heat pump arrangement heats the fluid and transfers the fluid to the stratified heat storage device. From the heat storage device, fluid is subtracted by the mixing arrangement. The subtracted fluid may comprise fluids of different temperatures, which may be mixed in order to regulate the temperature of the fluid entering the heat distribution system. The subtracted fluid from the heat storage device may also be mixed with returning fluid from the heating distribution system. By adjusting the fluid flow through the heat distribution system or mixing of fluids of different temperatures, the temperature of the returning fluid may be regulated. Thus, in certain situations, a part of the returning fluid may go back to the mixing arrangement. By allowing returning fluid to go back to the mixing arrangement, already heated fluid may be reused for heating in the heating distribution system, which is energy efficient. When the temperature of the returning fluid decreases and cannot be used for heating anymore, the returning fluid is supplied to the heat storage device. The temperature of the returning fluid from the heating distribution system is then low enough to maintain a relatively high differential temperature within the heat storage device. The relatively low temperature fluid in the heat storage device may then be subtracted by the heat pump arrangement. The temperature of the ingoing fluid to the heat pump arrangement may thus be significantly lower than the outgoing fluid from the heat pump arrangement, which is important for the functionality, efficiency and capacity of the heat pump arrangement. By means of the present disclosure, a robust and steady temperature difference within the heat storage device is maintained, which in turn enables operation of the heat pump arrangement. Thereby, an energy efficient heating system is obtained.

According to an example of the present invention, the heat pump arrangement comprises a refrigerant comprising gas. According to an example, the heat pump arrangement comprises a natural refrigerant. The refrigerant may comprise one natural refrigerants or a mix of natural refrigerants. Natural refrigerants may comprise ammonia, CO₂ and/or propane. This means that the heat pump arrangement is not dependent on synthetic refrigerants. Heat pumps with synthetic refrigerants have a disadvantage; the synthetic refrigerants can leak which in turn causes damage to the environment. Thus, by means of using a heat pump arrangement comprising natural refrigerants, the risk of harming the environment is reduced. The use of natural refrigerants in installations reduces the greenhouse effect while also providing energy savings when compared to the use of synthetic refrigerants. Another advantage of the use of a natural refrigerant is that the purchase cost of this product is lower than the synthetic refrigerants, and there are no restrictions expected in the future.

According to a specific example, the refrigerant comprises CO₂. The natural refrigerant CO₂ has good physical properties, such as high refrigerant capacity. The use of CO₂ as 'refrigerant' is also encouraged by government tax subsidy in some jurisdictions. The use of CO₂ thus means that the heat pump arrangement may comprise a CO₂ heat pump, e.g. a transcritical CO₂ heat pump. A suitable heat pump to be used in the present disclosure may for example be a CO₂ Air-to-Water heat pumps supplied by e.g. Denso ^{®} (DENSO 'Eco-Cute' CO2 Heat Pumps). Commonly used heat pumps using a synthetic refrigerant gas may for example use a synthetic refrigerant gas such as R410A, which has a Global Warming Potential (GWP) of 2088. Denso's air-to-water heat pump uses the natural refrigerant CO₂, which has a GWP of just one. Thus, the use of a heat pump arrangement comprising a natural refrigerant such as CO₂, efficiently reduces the impact on the environment.

Normally, Denso's CO2 Air-to-Water heat pump is only a good fit for production of SHW (sanitary hot water). However, by means of the heating system according to the present disclosure comprising a heat pump arrangement and a stratified heat storage device, such heat pumps may also be implemented for space heating in buildings requiring high temperature output, in both less insulated and well-insulated buildings. Without the heating system according to the present invention, Denso's CO2 Air-to-Water heat pump would not be able to operate and effectively provide enough heat, since the temperature difference between the outgoing fluid from the heat pump and ingoing fluid to the heat pump would be too small.

According to the present invention, the heat storage device comprises at least one stratifier inlet device for distribution of returning fluid from the heating distribution system within the heat storage device. The stratifier inlet device exploits the pressure difference between the returning fluid and the fluid stored inside the heat storage device.

The pressure difference between the colder returning fluid and the warmer fluid in the heat storage device will ensure that the returning water stays inside the stratifier inlet device until it reaches the thermal layer where the fluid temperature inside and outside the stratifier inlet device is equal - thus the point of pressure equilibrium. At this point the returning fluid will exit the stratifier inlet device into the correct thermal layer and maintain the thermal stratification in the heat storage device. The stratifier inlet device thus manages the returning fluid from the heating distribution system and distributes the returning fluid in the heat storage device so that temperature difference within the heat storage device is maintained. According to an example, the stratifier inlet device comprises a tube with multiple outlets for discharging the returning fluid into the stratified storage device at differentiated temperatures. An example of such a stratifier inlet device is supplied by Solvis ^{®}. Such stratifier inlet device may be comprised in the heat storage device (in e.g. Solvis BEN Solo, 230L). According to another example, the stratifier inlet device may comprise two parallel plates arranged at a certain distance from each other. According to another example, the stratifier inlet device may comprise branching pipes with flap valves.

According to an example of the present invention, the heat storage device comprises at least one storage container, the storage container extending longitudinally between a top end and a bottom end, wherein the top end comprises at least one top inlet opening for outgoing fluid from the heat pump arrangement and at least one top outlet opening for top section fluid supplied to the mixing arrangement, wherein the bottom end comprises at least one bottom inlet opening for returning fluid from the heating distribution system and at least one bottom outlet opening for ingoing fluid subtracted by the heat pump arrangement, wherein an intermediate portion of the storage container arranged between the top end and the bottom end comprises at least one middle outlet opening for midsection fluid subtracted by the mixing arrangement.

The configuration of the storage container facilitates effective stratification of the fluid within the heat storage device. The high temperature outgoing fluid received from heat pump arrangement enters the storage container at the top end and the top end fluid exits the storage container from the top end. Thus, the top end of the storage container accommodates relatively warm fluid. The returning fluid from the heat distribution system, which thus is cooler than the warm fluid in the top end of the storage container, may be supplied to the storage container from the bottom end. Thus, the bottom end holds cooler fluid than the top end of the storage container. By being able to hold the temperature at the bottom end relatively cool (e.g. at 40 °C), while the temperature at the top end is significantly warmer (e.g. at 80 °C), efficient use of a high temperature output heat pump arrangement is enabled.

According to an example, the stratifier inlet device is arranged inside the storage container. According to an example, the stratifier inlet device is arranged at the bottom end of the storage container. According to an example, the stratifier inlet device extends from the bottom end towards the top end of the storage container. According to an example, the stratifier inlet device is connected to the at least one bottom inlet opening for returning fluid from the heating distribution system.

According to an example, an outlet tube is connected to the at least one middle outlet opening. The design of the outlet tube effects where and how fluid from the heat storage device is withdrawn. Thermal stratification is possible as fluid becomes less dense when heated. However, this can be greatly disturbed by undesirable and uncontrolled fluid flows, which stirs the otherwise thermally separated layers together and mixes them into a uniform temperature. Thus, it is important that fluid is withdrawn with care from the heat storage device, in order to avoid turbulence. According to an example, the mixing arrangement is configured to mix top section fluid received from the heat storage device and midsection fluid received from the heat storage device and returning fluid received from the heating distribution system in order to regulate the temperature of the fluid entering the heating distribution system.

It is important to control the temperature of the returning fluid received from the heating system, since the returning fluid may return to the heat storage device. The temperature of the fluid returning to the heat storage device is preferably not too warm, since this would affect the temperature distribution within the heat storage device. This in turn may affect the efficiency of the heat pump arrangement, since the efficiency of the heat pump arrangement depends on the temperature difference within the heat storage device.

By being able to mix top section fluid from the heat storage device, midsection fluid from the heat storage device and relatively cool returning fluid, the temperature of the returning fluid returning to the heat storage device may be regulated to a temperature suitable for maintaining the desired thermal stratification within the heat storage device to enable energy-efficient operation of the heat pump arrangement.

According to an example of the present invention, the mixing arrangement is configured to regulate the temperature distribution of the stored fluid within the heat storage device by withdrawing midsection fluid from the heat storage device. The fluid arranged in the midsection of the stratified heat storage device is often a tempered fluid, since it located in the middle of warmer and cooler fluid. By enabling removal of tempered fluid from the midsection of the fluid stored at differentiated temperatures, an increased differential between the warmer portion and the cooler portion of the stored fluid is achieved, which is important for the heat pump arrangement to efficiently operate. Thus, this feature increase the robustness and efficiency of the heating system.

As an example, an ideal situation for efficient operation of the heat system would involve having heat storage device comprising a major portion warmer fluid (e.g. at 80 °C) in the top section and a minor portion cooler fluid (e.g. at 40 °C) in the bottom section, and no tempered fluid in between the warmer and cooler fluid layer. However, there will always be a portion of tempered fluid (e.g. at 55°C). By being able to reduce the portion of tempered fluid when needed, the temperature differential within the heat storage device may actively be controlled by the mixing arrangement. Thus, a desired temperature distribution within the heat storage device may be recovered and maintained. The withdrawn midsection fluid from the heat storage device may, as previously mentioned, be subtracted to heat distribution system via the mixing arrangement. Thus, the withdrawn midsection fluid may be used to regulate the temperature of the fluid entering the heat distribution system.

According to the present invention, the heating system further comprises a bypass arrangement for bypassing the heat storage device during start up of the heating arrangement. This feature enables the disallowance of too cold fluid to enter the heat storage device, which may cause disturbances of the stratified storage of fluid. Thus, during a cold start up of the heat pump arrangement, the heat storage device may be bypassed until a desired predetermined temperature of the outgoing fluid from the heat pump arrangement is obtained. The outgoing fluid will, if not warm enough, return to the heat pump arrangement and be heated again. This process will be repeated until the outgoing fluid has a sufficiently high temperature to be allowed to enter the heat storage device without creating disturbance and/or cause mixing of the stratified temperature layers of fluid within the heat storage device. Proper stratification within the heat storage device is essential for the heat pump arrangement to operate efficiently.

According to an example, the bypass arrangement may be arranged in the heat storage device. According to an example, the bypass arrangement may comprise a bypass valve and a bypass line. According to an example, the bypass line is arranged to connect the outgoing fluid line from the heat pump arrangement and the ingoing fluid line to the heat pump arrangement. The bypass valve may be a temperature regulated valve which allows the outgoing fluid to pass into the heat storage device when the outgoing temperature of the outgoing fluid is above a predetermined temperature. If the temperature of the outgoing fluid is below the predetermined temperature, the outgoing fluid is returned to the heat pump arrangement via the bypass line. The bypass valve may comprise a mechanical temperature regulated valve. Alternatively, the bypass valve may be controlled by the control device on the basis of a temperature sensor or a timer. According to an example, the bypass arrangement is configured to bypass the heat storage device when the outgoing temperature of the outgoing fluid from the heat pump arrangement is less than 40°C. Thus, the outgoing fluid from the heat pump arrangement is only allowed to enter the heat storage device if the temperature of the outgoing fluid is at least 40°C. According to other examples, the outgoing fluid from the hot pump arrangement is only allowed to enter the heat storage device if the temperature of the outgoing fluid is at least 45°C, or 50°C, or 55°C, or 60°C.

According to an example of the present invention, the heat storage device further comprises an electrical heater arrangement. The electric heating arrangement may be arranged in or around the heat storage device. The electrical heater arrangement may be arranged in the midsection of the stored fluid in the heat storage device. According to an example, the electrical heater arrangement may be arranged in the intermediate portion of the storage container arranged between the top end and the bottom end. The electrical heater arrangement may be used as backup heating, e.g. in the case of a breakdown of the heat pump arrangement. Thus, in emergency situations, the fluid within the heat storage device may be heated by the electrical heater arrangement. Fluid heated by the electric heater arrangement may thus be supplied to the mixing arrangement and forwarded to the heat distribution system for heating of the building. The returning fluid from the heat distribution system may then return to the heat storage device. According to another example, the electrical heater arrangement may be used as an auxiliary heater at peak demands. Such peak demands may for example arise due to change of weather conditions and/or increased demand of e.g. domestic hot water, which may be heated by means of the heat storage device. Some of these peak demands may be predicted in advance, and extra heat may then be stored beforehand within the heat storage device. When using the electrical heater arrangement as an auxiliary heating source, the capacity of the heating system is significantly increased. According to an example, the heat pump arrangement may provide approx. 6kW, the heat storage device (comprising 230L of fluid) approx. 4kW and the heat electrical heater arrangement an additional 3 kW, which add up to a temporary capacity of 13 kW, which is a substantial increase. In addition, the possibility to use the electrical heater arrangement as an auxiliary heater during peak demands also has the advantage that a relatively small heat pump may be used in the heating system, which is both cost-effective and energy efficient.

According to an example of the invention, the heat storage device is configured to be connected to a water heater arrangement for heating of domestic water. By using the heat storage device for heating of domestic water, the need of a separate heating device for heating of domestic water is removed. Thus, using the same heat storage device for both heating of building space and domestic water is a both cost-effective and energy efficient solution. According to an example, the heat storage device is configured to supply heated fluid to the water heater arrangement for heating of domestic water and to receive fluid returning from the water heater arrangement. According to an example, the heat storage device is further configured to supply cooler fluid to the water heat arrangement for regulating the temperature of the ingoing temperature to the fluid pump and heat exchanger. According to an example, the water heater arrangement comprises a regulation valve, a fluid pump and a heat exchanger. The regulation valve may be used to limit the temperature of the ingoing fluid to the fluid pump and the heat exchanger by mixing heated fluid from the storage heat device with cooler fluid from the storage heat device. Thereby, the appropriate temperature for the heat exchanger is obtained, enabling efficient heating of domestic hot water. According to a specific example, the regulation valve controls that the ingoing fluid to the fluid pump and the heat exchanger is less than 65°C. The regulation valve may comprise a temperature regulated valve, such as a mechanical temperature regulated valve. Alternatively, the regulation valve may be controlled by a controller. The controller may be the control device as disclosed herein. The heat exchanger may comprise a plate heat exchanger or any other suitable type of heat exchanger for heating of domestic hot water (DHW). A DHW temperature sensor may be arranged on the tap water station side of the heat exchanger. The DHW temperature sensor may be used to control the speed of the fluid pump. On the basis of the fluid pump speed, the temperature of the produced domestic water may be regulated.

According to an example of the invention, the heat storage device comprises the water heater arrangement for heating of domestic water. According to an example, the heat storage device is configured to accommodate at least a part of the water heater arrangement. Thus, the water heater arrangement may at least partly be arranged within the heat storage device. In an example, the water heater arrangement comprises a hygiene coil arranged in the heat storage device.

According to an aspect of the present invention, a computer-implemented method, performed by a control device, for controlling a heating system configured to be connected to a heating distribution system of a building is provided. The heating system comprises a heating arrangement, a stratified heat storage device arranged in fluid connection with a mixing arrangement and the heating distribution system. The method comprises the steps of: heating of a fluid by means of a heating arrangement and storing of the fluid at differentiated temperatures in the stratified heat storage device; regulating, in the mixing arrangement, the temperature of the fluid entering the heating distribution system; controlling the return of the returning fluid from the heating distribution system to the heat storage device to ensure that the temperature difference within the heat storage device is at least 10°C.

By heating the fluid and storing the fluid at differentiated temperatures in the stratified heat storage device, a thermal layering of fluid in the heat storage device is achieved. The heating of the fluid may be achieved by means of a heating arrangement, such as a heat pump arrangement in fluid connection with the heat storage device as disclosed herein. However, the heating arrangement may according to other examples comprise an electric heating arrangement, a gas condensing boiler, a solar thermal collector, district heating or any other suitable heating device for heating of a fluid in a heat storage device. The heat arrangement may comprise more than one source of heating, such as multiple heat pump arrangements, or a heat pump arrangement and an electric heater arrangement, or a heat pump arrangement and district heating etc. Due to the heating of the fluid, heated fluid may be transferred to the heat distribution system of the building and used for e.g. space heating.

By regulating the temperature of the fluid entering the heating distribution system by means of the mixing arrangement, the temperature of the space heated by the heating distribution system is affected. The temperature of the fluid entering the heat distributions system may thus be adjusted in order to, for example, meet the residents' desired indoor room temperature. The heat output of the heat distribution system is influenced by the flow rate through the distribution system and the temperature of the fluid entering the heat distribution system.

The regulation of the temperature of the fluid entering the heat distribution system may be achieved by mixing fluids withdrawn from at least two different thermal layers within the heat storage device. Due to the thermal stratification, the different fluid may thus have different temperatures. The fluids to be mixed may be withdrawn from a top section and a midsection of the heat storage device. The warmer fluid, withdrawn from the top section, and the cooler fluid, withdrawn from the midsection, may also be mixed with the returning fluid from the heat distribution system in the mixing arrangement, to further lower the temperature of the fluid entering into and returning from the heat distribution system.

The mixing arrangement may comprise a mixing valve and a circulation pump. The mixing valve and the speed of the circulation pump may be controlled on the basis of temperature sensors. The heat output of the heat distribution system is influenced by the mass flow rate, which may be controlled by the speed of the circulation pump, and the supply temperature, which may correspond to the temperature of the fluid entering the heat distribution system. A mixing arrangement temperature sensor may be arranged downstream of the mixing valve in order to provide direct feedback of the current mixing. The regulation of the temperature of the fluid entering the heating distribution system may thus be controlled by adjusting the mixing position of the mixing valve on the basis of the values provide by the mixing arrangement temperature sensor. Alteration of the mixing position of the mixing valve may be adjusted step-wise, in order to see the effect of the alteration before further adjustments. A returning fluid temperature sensor may be arranged downstream of the heat distribution system. Control of the return of the returning fluid may thus be controlled on the basis of the values provide by the returning fluid temperature sensor. According to examples, the mixing arrangement may comprise other suitable components to regulate the mixing of fluids and the fluid flow in the heat distribution system than a mixing valve and a circulation pump. For example, a thermostatic mixing valve may be used for the mixing of fluids. The fluid flow may be controlled by any suitable type of fluid pump, such as a constant pressure pump.

By controlling the return of the returning fluid from the heating distribution system to the heat storage device to ensure that the temperature difference within the heat storage device is at least 10°C, the thermal stratification within the heat storage device may be sustained. According to other examples, the temperature difference within the heat storage device is at least 15°C, or 20°C, or 25°C, or 30°C, or 35°C, or 40°C, or 45°C, or 50°C.

Being able to control the temperature of the returning fluid and the amount of returning fluid to the heat storage device is important in order to maintain the thermal stratification within the heat storage device. A robust thermal stratification within the heat storage device by means of the method disclosed above has many advantages. Due to the differential temperature within the heat storage device, the heat storage device may be connected to a heating arrangement requiring a temperature differential to operate. For example, a heat differential of about 10°C may be suitable for operation of e.g. a heat pump arrangement comprising propane as a refrigerant, a gas condensing boiler or a solar thermal collector. The use of e.g. a heat pump arrangement comprising a refrigerant such as CO₂ for heating of the fluid may require a higher temperature differential within the heat storage device, such as a temperature differential of 20°C - 30°C. A higher temperature difference in the heat storage device may for a CO₂ heat pump be beneficial in order to be able to supply the CO₂ heat pump with ingoing fluid from the heat storage device at an ingoing temperature significantly lower than the outgoing temperature of the outgoing fluid from the heat pump arrangement. The temperature differential between the ingoing fluid and the outgoing fluid may affect the energy efficiency of the heat pump. Controlling and ensuring the temperature differential within the heat storage device may thus affect the efficiency of the currently used heating arrangement. Consequently, maintaining a robust and reliable thermal stratification comprising a significant temperature differential within the heat storage device is utterly important for being able to optimize the energy consumption for the heating arrangement currently applied for heating of the fluid.

Maintaining the thermal stratification within the heat storage device is also important for being able to efficiently regulate the temperature of the fluid entering the heat distribution system. For being able to efficiently regulate the temperature of the fluid entering the heat distribution system, it is beneficial to have both warmer and cooler fluid available in the heat storage device. If too warm returning fluid would continuously return to the heat storage device, there may after a while not be any fluid available that is cool enough to mix with the warmer fluid to lower the temperature of the fluid entering into and returning from the heat distribution system. Consequently, the ability to regulate the temperature entering into and returning from the heat storage device would decrease. Thus, maintaining a robust and reliable thermal stratification within the heat storage device is utterly important for being able to control the heating of the heating distribution system.

According to an example of the invention, the heating of a fluid comprises heating of the fluid to a temperature of at least 55°C. The heating of the fluid may comprise heating by means of e.g. a heat pump arrangement, an electric heating arrangement, a solar thermal collector, a gas condensing boiler, a biomass boiler, district heating or any other suitable heating device for temperatures of at least 55°C. According to examples, the heating of a fluid comprises heating of the fluid to a temperature of at least 60°C, or at least 65°C, or at least 70°C, or at least 75°C, or at least 80°C, or at least 85°C, or at least 90°C. Such temperature is a relatively high output temperature compared to other common applications. Due to such high output temperature, buildings requiring high temperature output can be heated. According to an example, the heating may be enabled by combining different types of heating sources. By being able to use more than one heating source at the same time, higher output temperatures may be achieved. Also, by having more than one heating source, back-up heating is always available.

According to an example of the invention, the heating arrangement comprises a heat pump arrangement, wherein the heat pump arrangement is arranged in fluid connection with the heat storage device. The heating comprises: controlling the heat pump arrangement for heating of the fluid. The heat pump arrangement may be a heat pump arrangement as previously described herein. By using a heat pump arrangement for heating, energy efficient and fossil free heating is achieved.

According to to the invention, the heat pump arrangement is configured to supply the outgoing fluid to the heat storage device at an outgoing temperature of at least 55°C. As previously mentioned, outgoing temperature of at least 55°C is a relatively high output temperature compared to other common applications. Due to such high output temperature, buildings requiring high temperature output can be heated. A CO₂ heat pump is an example of an energy efficient heat pump being able to supply such relatively high output temperature.

According to the invention, an ingoing temperature of ingoing fluid to the heat pump arrangement subtracted from the heat storage device is at least 20°C lower than the outgoing temperature of the outgoing fluid from the heat pump arrangement. According to an example, the ingoing temperature of the ingoing fluid to the heat pump arrangement is at least 30°C lower that the outgoing temperature of the outgoing fluid from the heat pump arrangement. Thus, the temperature difference between the outgoing fluid from the heat pump arrangement and the ingoing fluid to the heat pump arrangement may be at least 30°C. According to other examples, the ingoing temperature of the ingoing fluid to the heat pump arrangement is at least 25°C, or 35°C, or 40°C, or 45°C, or 50°C, or 55°C, or 60°C, or 65°C, or 70°C, or 75°C, lower that the outgoing temperature of the outgoing fluid from the heat pump arrangement. The efficiency of the heat pump arrangement may increase with an increased temperature difference.

According to an example of the invention, the heating arrangement comprises an electric heater arrangement, the heating comprises: controlling the electric heater arrangement for heating of the fluid. The electric heater arrangement may be the electric heater arrangement as previously described herein. By using an electric heater arrangement for heating, energy efficient and fossil free heating is achieved. The electrical heater arrangement may be used as backup heating, e.g. in the case of a breakdown of the heat pump arrangement. According to another example, as also previously mentioned herein, the electrical heater arrangement may be used as an auxiliary heater for heating at peak demands.

According to an example of the invention, the regulating, in the mixing arrangement, comprises regulating a mix of top section fluid received from the heat storage device and midsection fluid received from the heat storage device and returning fluid received from the heating distribution system. Thereby, an efficient regulation of the temperature of the fluid entering the heating distribution system is achieved.

According to an example of the invention, the controlling of the return of the returning fluid from the heating distribution system to the heat storage device comprises controlling the fluid flow through the heating distribution system and/or withdrawing at least a part of the returning fluid back to the mixing arrangement. The fluid flow through the heating distribution system may be controlled by adjusting the pump speed of the circulation pump. The withdrawing of at least a part of the returning fluid back to the mixing arrangement may be controlled by regulating the valve position in the mixing valve.

According to an example of the invention, the controlling comprises: increasing the fluid flow through the heat distribution system when the returning fluid has a temperature value less or equal to a first threshold value; and/or decreasing the fluid flow through the heat distribution system when the returning fluid has a temperature value above the first threshold value; and/or withdrawing at least a part of the returning fluid back to the mixing arrangement when the returning fluid has a temperature value above a second threshold value, and/or full recirculation of the returning fluid back to the mixing arrangement when the returning fluid has a temperature value above a third threshold value. By taking different measures, the thermal stratification within the heat storage device may be maintained and/or restored.

Thus, according to the first example, the fluid flow through the heat distribution system is controlled to increase when the returning fluid has a temperature value less or equal to a first threshold value. For example, if the temperature of the returning fluid is too low, which may be determined by the returning fluid temperature sensor, the speed of the circulation pump will be increased

According to the second example, the fluid flow through the heat distribution system is controlled to decrease when the returning fluid has a temperature value above the first threshold value. For example, if the temperature of the returning fluid is too high, the circulation pump speed will be reduced.

According to the third example, at least a part of the returning fluid is controlled to be withdrawn back to mixing arrangement when the returning fluid has a temperature value above a second threshold value. For example, if the adjustment of the speed of the circulation pump is not enough to decrease the temperature of the returning fluid, the returning fluid will at least partly be transferred back to the mixing arrangement, in order to further lower the temperature of the returning fluid.

According to fourth example, the returning fluid is controlled to full recirculate back to the mixing arrangement when the returning fluid has a temperature value above a third threshold value. For example, the mixing arrangement may be used in a recirculation mode to cool down the returning fluid from the heat distribution system by fully circulating the returning fluid back to the mixing arrangement until a desired return temperature of the returning fluid is reached again. This is a distress measure, usually indicating a hydraulic problem within the heating system. However, it may be used as an additional way for controlling the return temperature of the returning fluid.

The threshold values mentioned above may comprise predetermined threshold value. The threshold values may be desired values and/or optimized values. The threshold values may be optimized for the current application. The threshold value may be determined on the basis of experiments and test runs or being retrieved from data sheets and/or databases.

According to an aspect, a computer program comprising instructions which, when the computer program is executed by a computer, cause the computer to carry out the method as disclosed herein is provided. By means of the computer program, an increased control of the heating efficiency of the heating system may be obtained. The computer program causes the control device to perform the above methods steps when executed, with increased accuracy, predictability, reproducibility and traceability compared to performing the method steps manually and/or in accordance with various rules of thumb.

According to an aspect of the invention, a computer-readable medium comprising instructions, which when executed by a computer causes the computer to carry out the method as disclosed above is provided. The computer-readable medium may be any tangible and/or non-transitory medium that may contain or store a computer program for execution by a processor.

According to an aspect of the invention, a control device for controlling a heating system configured to be connected to a heating distribution system of a building is provided, wherein the control device is configured to perform the method as disclosed above.

It will be appreciated that all the examples described for the method aspect of the disclosure performed by the control device are also applicable to the control device aspect of the disclosure. That is, the control device may be configured to perform any one of the steps of the method according to the various examples described above.

Thus, the control device may be configured to control the heating arrangement and the mixing arrangement. According to examples, the control device may be configured to control the heat pump arrangement and/or the electrical heater arrangement. The control device may be configured to monitor sensors within the heating system, such as temperature sensors and any other sensors, such as pressure sensor or fluid sensors. The control device may synchronise the control of the mixing arrangement and any heating arrangement to meet the demand from the heating distribution system and the user of the heating distribution system. According to an example, the control device may be arranged in communication with the water heater arrangement.

It is to be understood that the control device performing the disclosed method may be implemented as a separate entity or distributed in two or more physical entities. The control device may comprise one or more control units and/or computers. The control device may thus be implemented or realised by the control device comprising a processor and a memory, the memory comprising instructions, which when executed by the processor causes the control device to perform the herein disclosed method steps.

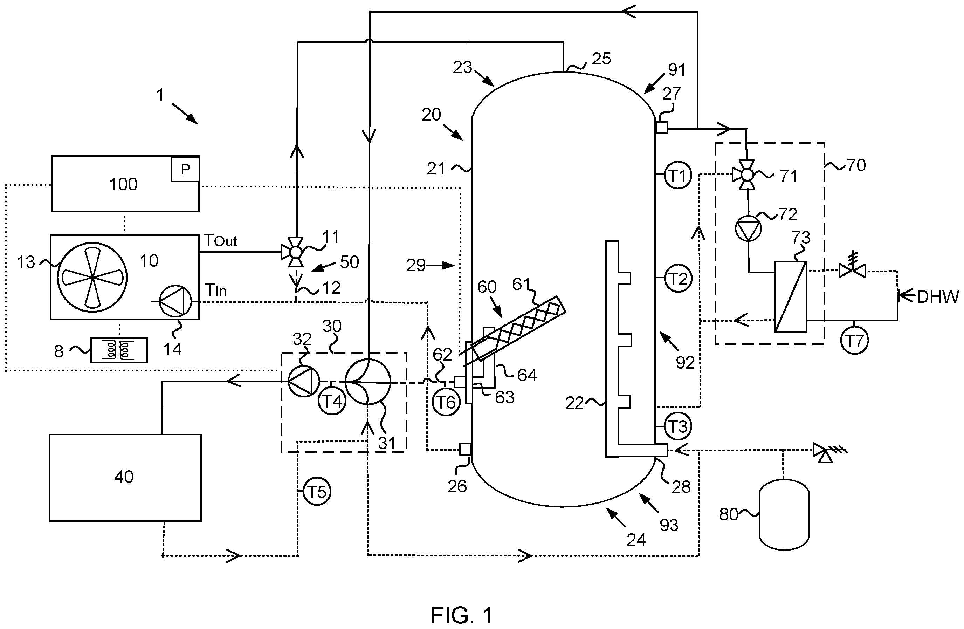

The present invention will now be further illustrated with reference to the appended figures, wherein for the sake of clarity and understanding of the invention some details of no importance are deleted from the figures. Moreover, the figures shall not be considered drawn to scale as some features may be exaggerated in order to more clearly illustrate the invention Figure 1 schematically illustrates a heating system 1 according to an example of the present invention. The heating system 1 is configured to be connected to a heating distribution system 40 of a building. The building may be an existing building or a new building. The heating system 1 comprises: a heat pump arrangement 10 configured to heat a fluid; a stratified heat storage device 20 configured to store the fluid at differentiated temperatures, wherein the heat storage device 20 is arranged in fluid connection with the heat pump arrangement 10; a mixing arrangement 30 arranged in fluid connection with the heat storage device 20 and the heating distribution system 40; and a control device 100 for controlling the heating system 1.

The heat distribution system 40 may comprise a least one fluid circuit. The fluid circuit may comprise multiple radiators, such as panel and bathroom radiators, floor heating and/or other types of devices needed to be heated. According to an example, the fluid comprises water. The fluid may comprise water comprising additives, such a glycol. According to a specific example, the fluid is water. Water is a cost-effective and highly available fluid with suitable thermodynamic properties for heating of buildings. According to other examples, the fluid may comprise oil, or any other fluid with suitable thermodynamic properties for the current application.

The heat pump arrangement 10 may comprise a heat pump 14. The heat pump 14 may comprise an electrically driven compression heat pump connected to a power source 8. The heat pump 14 may be a heat pump comprising components such as a compressor, a condenser or gas cooler, an expansion valve and an evaporator. The heat pump arrangement 10 may comprise a suitable type of refrigerant, such as propane, ammonia or CO₂. Energy for the refrigerant may be collected from external air. A centrifugal fan 13 may provide airflow. Thus, according to an example, heat pump arrangement 10 may comprise an air-to-water heat pump. According to another example, the heat pump arrangement may comprise a ground-source heat pump. The at least one heat pump 14 may be arranged outside, i.e. placed on the outside of the dwelling. The heat pump arrangement 10 may be connected to a heat storage device 20, which may be fitted inside the dwelling. The heat pump arrangement 10 may be configured to supply outgoing fluid to the heat storage device 20 and to subtract ingoing fluid from the heat storage device 20.

The stratified heat storage device 20 is configured to store the fluid at differentiated temperatures by means of thermal layering. The heat storage device 20 is arranged in fluid connection with the heat pump arrangement 10 so that outgoing fluid from the heat pump arrangement 10 may be transferred to the heat storage device 20 while ingoing fluid to the heat pump arrangement 10 may be transferred from the heat storage device 20. The mixing arrangement 30 may regulate the temperature of the fluid entering the heating distribution system 40 by mixing fluids of different temperatures. The temperature delivered by the heating distribution system 40 to the building may thus be regulated by means of the mixing arrangement 30. This means that the temperature of the space heated by the heating distribution system 40 is thus affected.

The mixing arrangement 30 may comprise a mixing valve 31 and a circulation pump 32. The mixing valve 31 and the speed of the circulation pump 32 may be controlled on the basis of temperature sensors T1-T6. A mixing arrangement temperature sensor T4 may be arranged downstream of the circulation pump 32 in order to provide direct feedback of the current mixing. Thus, the mixing arrangement temperature sensor T4 may be used to control the mixing position of mixing valve 31, in order to regulate the temperature of the fluid entering the heat distribution system 40. An ingoing fluid temperature sensor (not shown) may be configured to monitor the ingoing temperature T_{In} of the ingoing fluid subtracted from the heat storage device 20 by the heat pump arrangement 10. An outgoing fluid temperature sensor (not shown) may be configured to monitor the outgoing temperature T_{Out} of the outgoing fluid from the heat pump arrangement 10.

The fluid subtracted from the heat storage device 20 to the mixing arrangement 30 may be withdrawn from different thermal layers in the heat storage device 20.

According to an example, the fluid subtracted from the heat storage device 20 to the mixing arrangement 30 may comprise a top section fluid and a midsection fluid, wherein the top section fluid is subtracted from a top section 91 of the heat storage device 20 and the midsection fluid is subtracted from the midsection 92 of the heat storage device. The midsection 92 of the heat storage device 20 is arranged between the top section 91 and a bottom section 93 of the heat storage device 20. The top section fluid may be warmer than the midsection fluid. The different temperatures of the fluid thus depend on the thermal stratification in the heat storage device 20 and from which thermal layer the fluid is withdrawn. In the mixing arrangement 30, the top section fluid and the midsection fluid may be mixed with returning fluid from the heat distribution system 40. Due to the mixing of fluids at different temperatures in the mixing arrangement 30, the temperature of the fluid entering into the heating distribution system 40 may be regulated. A returning fluid temperature sensor T5 may be arranged downstream of the heat distribution system 40. The returning fluid temperature sensor T5 may monitor the temperature of the returning fluid from the heating distribution system 40. The mixing valve 31 and the speed of the circulation pump 32 may be controlled on the basis of the returning fluid temperature sensor T5.

Depending on the temperature of the returning fluid, the returning fluid may be reused for further heating of the heating distribution system 40. In such case the returning fluid may at least partly be withdrawn back to the mixing arrangement 30. If not withdrawn back to the mixing arrangement 30, the returning fluid returns to the heat storage device 20. The return of the returning fluid may be controlled by e.g. adjusting the fluid flow through the heating distribution system 40 and/or withdrawing at least a part of the returning fluid back to the mixing arrangement 30. The fluid flow may be adjusted by means of altering the circulation pump 32 speed and the amount of returning fluid going back to the mixing arrangement 30 depends on the regulation of the mixing valve 31.

From the heat storage device 20, ingoing fluid to the heat pump arrangement 10 may be subtracted. The fluid having the lowest temperature in the heat storage device 20 will be accommodated at the bottom section 93 of the heat storage device 20. Thus, the ingoing fluid to the heat pump arrangement 10 may be subtracted from the bottom section 93 of the heat storage device 20. Thereby, it is assured that the temperature of the ingoing fluid to the heat pump arrangement 10 is significantly lower than the temperature of the outgoing fluid from the heat pump arrangement 10.

The heat pump arrangement 10 is configured to supply the outgoing fluid to the heat storage device 20 at an outgoing temperature T_{Out} of at least 55°C. According to examples, the heat pump arrangement 10 is configured to supply outgoing fluid to the heat storage device at a temperature of at least 60°C, or at least 65°C, or at least 70°C, or at least 75°C, or at least 80°C, or at least 85°C, or at least 90°C. Due to such high output temperature, buildings requiring high temperature output can be heated. However, a heat pump arrangement 10 having such high output temperature may demand a high differential of outgoing temperature T_{Out} and ingoing temperature T_{In} in order to operate. The differential temperature needed for enabling operation of the heat pump arrangement 10 is achieved by means of the implementation of the stratified heat storage device 20 and the mixing arrangement 30 in the heating system 1. These features and their configuration enable that the ingoing temperature T_{In} of the ingoing fluid subtracted from the heat storage device 20 by the heat pump arrangement 10 is at least 20°C lower than the outgoing temperature T_{Out} of the outgoing fluid from the heat pump arrangement 10. This means that the temperature difference between the outgoing fluid from the heat pump arrangement 10 and the ingoing fluid to the heat pump arrangement 10 is at least 20°C. According to other examples, the ingoing temperature of the ingoing fluid to the heat pump arrangement is at least 25°C, 30°C or 35°C, or 40°C, or 45°C, or 50°C, or 55°C, or 60°C, or 65°C, or 70°C, or 75°C, lower that the outgoing temperature of the outgoing fluid from the heat pump arrangement. The efficiency of the heat pump arrangement may increase with an increased temperature difference.

The heating system 1 is controlled by a control device 100. The configuration of the control device 100 combined with the hydraulic properties of the heating system 1 makes it possible to guarantee the optimum working conditions of the heat pump arrangement 10 and at the same time supply the required heating to the heating distribution system 40 at any time.

As shown in figure 1, the heat storage device 20 may comprise at least one temperature sensor T1-T3 For example, the heat storage device 20 may comprise a top section temperature sensor T1 arranged at the top section 91 of the heat storage device 20, and a bottom section temperature sensor T3 arranged at the bottom section 93 of the heat storage device 20. The bottom section temperature sensor T3 may monitor the temperature of the bottom section fluid. In between the top section temperature sensor T1 and the bottom section temperature sensor T3, at least one intermediate temperature sensor T2 may be arranged. These temperature sensors T1-T3 may be used for monitoring and controlling the temperature distribution within the heat storage device 20. A midsection fluid temperature sensor T6 may be arranged between the heat storage device 20 and the mixing arrangement 30 in order to monitor the temperature of the midsection fluid subtracted by the mixing arrangement 30 from the heat storage device 20. The heating system 10 may comprise an expansion vessel 80.

When the heating system 1 is operating, the heat pump arrangement 10 heats the fluid and transfers the fluid to the stratified heat storage device 20. From the heat storage device 20, fluid is subtracted by the mixing arrangement 30. The subtracted fluid may comprise fluids of different temperatures, which may be mixed in order to regulate the temperature of the fluid entering the heat distribution system 40. The subtracted fluid from the heat storage device 20 may also be mixed with returning fluid from the heating distribution system 40. By adjusting the fluid flow through the heat distribution system 40 or mixing of fluids of different temperatures, the temperature of the returning fluid may be regulated. Thus, in certain situations, a part of the returning fluid may go back to the mixing arrangement 30. By allowing returning fluid to go back to the mixing arrangement 30, already heated fluid may be reused for heating in the heating distribution system 40, which is energy efficient. When the temperature of the returning fluid decreases and cannot be used for heating anymore, the returning fluid is supplied to the heat storage device 20. The temperature of the returning fluid from the heating distribution system 40 is then low enough to maintain a relatively high differential temperature within the heat storage device 20. The relatively low temperature fluid in the heat storage device 20 may then be subtracted by the heat pump arrangement 10. The temperature of the ingoing fluid to the heat pump arrangement 10 may thus be significantly lower than the outgoing fluid from the heat pump arrangement 10, which is important for the functionality, efficiency and capacity of the heat pump arrangement 10.

According to an example, the heat pump arrangement 10 may comprise a natural refrigerant. The heat storage device 20 comprises at least one stratifier inlet device 22 for distribution of returning fluid from the heating distribution system 40 within the heat storage device 20. According to the example illustrated in Figure 1, the stratifier inlet device 22 may comprise a tube with multiple outlets for discharging the returning fluid into the stratified storage device at differentiated temperatures.

The heat storage device 20 may comprise at least one storage container 21. The storage container 21 extends longitudinally between a top end 23 and a bottom end 24. The top end 23 comprises at least one top inlet opening 25 for outgoing fluid from the heat pump arrangement 10 and at least one top outlet opening 27 for top section fluid supplied to the mixing arrangement 30. The bottom end 24 comprises at least one bottom inlet opening 28 for returning fluid from the heating distribution system 40 and at least one bottom outlet opening 26 for ingoing fluid subtracted by the heat pump arrangement 10. An intermediate portion 29 of the storage container 21 arranged between the top end 23 and the bottom end 24 may comprise at least one middle outlet opening 63 for midsection fluid subtracted by the mixing arrangement 30.

In the example as shown in Figure 1, the stratifier inlet device 22 is arranged inside the storage container 21. The stratifier inlet device is arranged at the bottom end 24 of the storage container 21 and extends from the bottom end 24 towards the top end 23 of the storage container 21. The stratifier inlet device is connected to the at least one bottom inlet opening 28 for returning fluid from the heating distribution system 40. An outlet tube 64 may be connected to the at least one middle outlet opening 63.

The mixing arrangement 30 may be configured to mix top section fluid received from the heat storage device 20 and midsection fluid received from the heat storage device 20 and returning fluid received from the heating distribution system 40 in order to regulate the temperature of the fluid entering the heating distribution system 40. The mixing arrangement 30 may be configured to regulate the temperature distribution of the stored fluid within the heat storage device 20 by withdrawing midsection fluid from the heat storage device 20. The fluid arranged in the midsection 92 of the stratified heat storage device 20 is often a tempered fluid, since it located in the middle of warmer and cooler fluid. By enabling removal of tempered fluid from the midsection 93 of the fluid stored at differentiated temperatures, an increased differential between the warmer portion and the cooler portion of the stored fluid is achieved, which is important for the heat pump arrangement 10 to efficiently operate.

The heating system 10 further comprises a bypass arrangement 50 for bypassing the heat storage device 20 during start up of the heat pump arrangement 10. The bypass arrangement may comprise a bypass valve 11 and a bypass line 12. The bypass line 12 is arranged to connect the outgoing fluid line from the heat pump arrangement 10 and the ingoing fluid line to the heat pump arrangement 10. The bypass valve 11 may be a temperature regulated valve which allows the outgoing fluid to pass into the heat storage device 20 when the outgoing temperature of the outgoing fluid is above a predetermined temperature. If the temperature of the outgoing fluid is below the predetermined temperature, the outgoing fluid is returned to the heat pump arrangement 10 via the bypass line 12. The bypass valve may comprise a mechanical temperature regulated valve. Alternatively, the bypass valve may be controlled by the control device 100 on the basis of a temperature sensor or a timer (not shown in the figures).

The heat storage device 20 may further comprise an electrical heater arrangement 60. The electric heating arrangement 60 may be arranged in or around the heat storage device 20. The electrical heater arrangement 60 may be arranged in the midsection 92 of the stored fluid in the heat storage device 20. A shown in figure 1, the electrical heater arrangement 60 may be arranged in the intermediate portion 29 of the storage container 21 arranged between the top end 23 and the bottom end 24. The electrical heater arrangement 60 may be used as backup heating, e.g. in the case of a breakdown of the heat pump arrangement 10. According to another example, the electrical heater arrangement 60 may be used as an auxiliary heater at peak demands.

The heat storage device 20 may be configured to be connected to a water heater arrangement 70 for heating of domestic water DHW. By using the heat storage device 20 for heating of domestic water, the need of a separate heating device for heating of domestic water is removed. According to the example shown in figure 1, the heat storage device 20 is configured to supply heated fluid to a water heater arrangement 70 for heating of domestic water and to receive fluid returning from the water heater arrangement 70. The water heater arrangement may comprise a regulation valve 71, a fluid pump 72 and a heat exchanger 73. The heat storage device 20 may also be configured to supply cooler fluid to the water heat arrangement 70 for regulating the temperature of the ingoing temperature to the fluid pump 72 and heat exchanger 73.

The regulation valve 71 may be used to limit the temperature of the ingoing fluid to the fluid pump 72 and the heat exchanger 73 by mixing heated fluid from the storage heat device 20 with cooler fluid from the storage heat device 20. Thereby, the appropriate temperature for the heat exchanger is obtained, enabling efficient heating of domestic hot water. According to a specific example, the regulation valve 71 controls that the ingoing fluid to the fluid pump 72 and the heat exchanger 73 is less than 65°C. The regulation valve 71 may comprise a temperature regulated valve, such as a mechanical temperature regulated valve. Alternatively, the regulation valve may be controlled by a controller. The controller may be the control device 100 as disclosed herein. The heat exchanger 73 may comprise a plate heat exchanger or any other suitable type of heat exchanger for heating of domestic hot water (DHW). A DHW temperature sensor T7 may be arranged on the tap water station side of the heat exchanger 73. The DHW temperature sensor T7 may be used to control the speed of the fluid pump 72. On the basis of the fluid pump 72 speed, the temperature of the produced domestic water may be regulated.

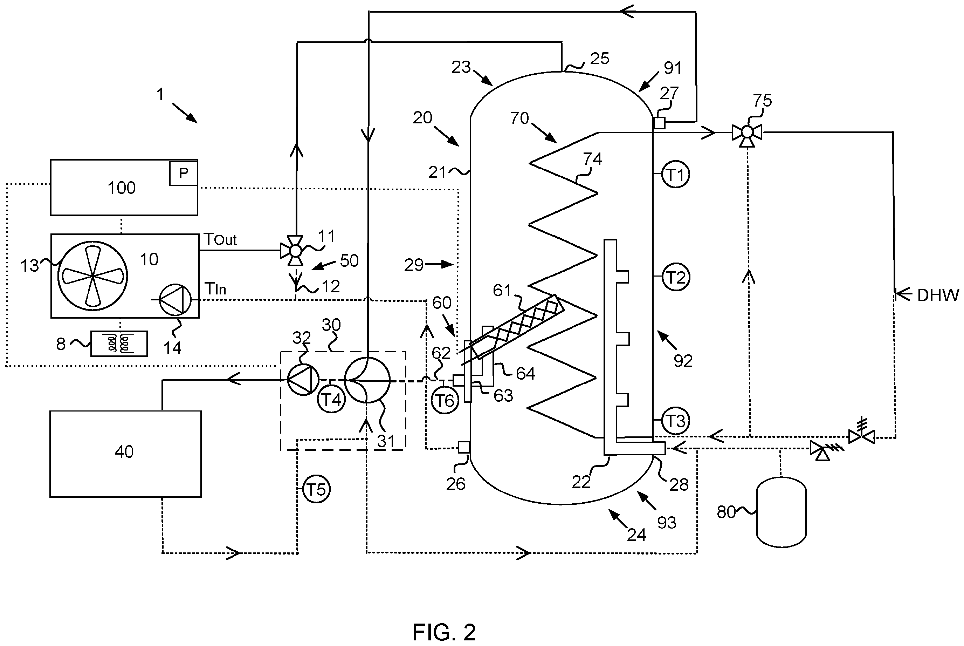

Figure 2 schematically illustrates a heating system 1 according to an example of the present invention. The heating system 1 may be configured as disclosed in Figure 1. However, in this example, the heat storage device 20 is configured to accommodate at least a part of the water heater arrangement 70. Thus, the water heater arrangement 70 may at least partly be arranged within the heat storage device 20. As schematically illustrated in Figure 2, the water heater arrangement 70 comprises a hygiene coil 74 arranged in the heat storage device 20. The water arrangement may also comprise a regulation valve 75.

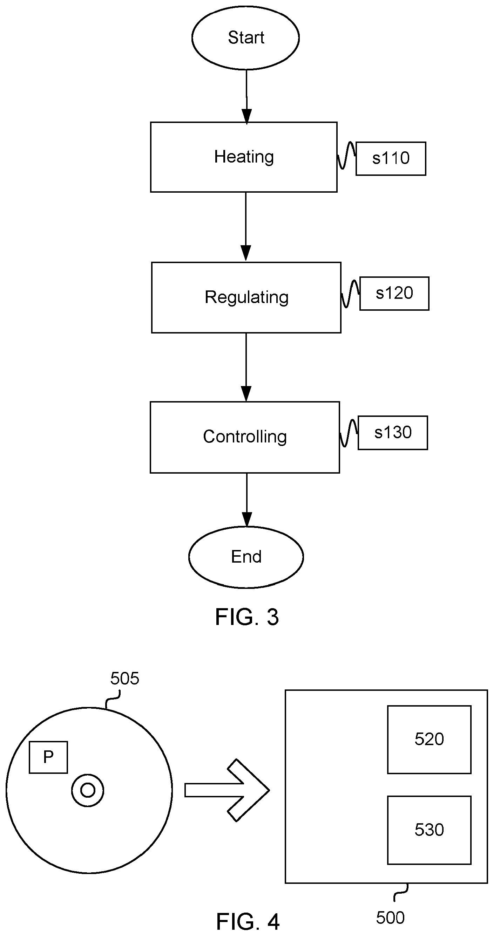

Figure 3 schematically illustrates a block diagram of a computer implemented method performed by a control device 100, for controlling a heating system 1 configured to be connected to a heating distribution system 40 of a building according to an example. According to examples, the method may relate to the heating system 1 as disclosed in figure 1 and figure 2. The method may thus according to an example be performed by the control device 100 as disclosed in Figure 1 and Figure 2.

The heating system 1 comprises a heating arrangement, a stratified heat storage device 20 arranged in fluid connection with a mixing arrangement 30 and the heating distribution system 40. The method comprises the steps of: heating s110 of a fluid by a heating arrangement and storing of the fluid at differentiated temperatures in the stratified heat storage device 20; regulating s120, in the mixing arrangement 30, the temperature of the fluid subtracted from the heat storage device 20 and entering the heating distribution system 40; controlling s130 using the mixing arrangement 30 the return of the returning fluid from the heating distribution system 40 to the heat storage device 20 based on temperature values of the returning fluid provided by a returning fluid temperature sensor arranged downstream the heating distribution system, to ensure that the temperature difference within the heat storage device 20 is at least 10°C.

By heating s110 the fluid and storing the fluid at differentiated temperatures in the stratified heat storage device 20, a thermal layering of fluid in the heat storage device 20 is achieved. The heat storage device 20 may according to an example be configured as previously described in relation to Figure 1 and Figure 2. The heating of the fluid may be achieved by means of a heating arrangement, such as a heat pump arrangement 10 in fluid connection with the heat storage device as shown in Figure 1 and Figure 2. However, the heating arrangement may according to other examples comprise an electric heating arrangement, a gas condensing boiler, a solar thermal collector, district heating or any other suitable heating device for heating of a fluid in a heat storage device. The heat arrangement may comprise more than one source of heating, such as multiple heat pump arrangements, or a heat pump arrangement and an electric heater arrangement, or a heat pump arrangement and district heating etc. Due to the heating of the fluid, heated fluid may be transferred to the heat distribution system 40 of the building and used for e.g. space heating.

The regulation of the temperature of the fluid entering the heat distribution system 40 may be achieved by mixing fluids withdrawn from at least two different thermal layers within the heat storage device 20. Due to the thermal stratification, the different fluid may thus have different temperatures. The fluids to be mixed may be withdrawn from a top section 91 and a midsection 92 of the heat storage device 20. The warmer fluid, withdrawn from the top section 91, and the cooler fluid, withdrawn from the midsection 92, may also be mixed with the returning fluid from the heat distribution system 40 in the mixing arrangement 30, to further lower the temperature of the fluid entering into and returning from the heat distribution system 40.

The mixing arrangement 30 may according to an example be configured as previously described in relation to Figure 1 and Figure 2. Thus, the mixing arrangement 30 may comprise a mixing valve 31 and a circulation pump 32. The mixing valve 31 and the speed of the circulation pump 32 may be controlled on the basis of temperature sensors T1-T5. The heat output of the heat distribution system 40 is influenced by the mass flow rate, which may be controlled by the speed of the circulation pump 32, and the supply temperature, which may correspond to the temperature of the fluid entering the heat distribution system 40. A mixing arrangement temperature sensor T4 may be arranged downstream of the mixing valve in order to provide direct feedback of the current mixing. The regulation of the temperature of the fluid entering the heating distribution system 40 may thus be controlled by adjusting the mixing position of the mixing valve 31 on the basis of the values provide by the mixing arrangement temperature sensor T4. Alteration of the mixing position of the mixing valve 31 may be adjusted step-wise, in order to see the effect of the alteration before further adjustments. A returning fluid temperature sensor T5 is arranged downstream of the heat distribution system 40. Control of the return of the returning fluid is thus controlled on the basis of the values provide by the returning fluid temperature sensor T5.

By controlling the return of the returning fluid from the heating distribution system 40 to the heat storage device to ensure that the temperature difference within the heat storage device 20 is at least 10°C, the thermal stratification within the heat storage device may be sustained. According to other examples, the temperature difference within the heat storage device 20 is at least 15°C, or 20°C, or 25°C, or 30°C, or 35°C, or 40°C.

The heating s110 of a fluid may comprise heating of the fluid to a temperature of at least 55°C. According to an example, the heating arrangement may comprise a heat pump arrangement 10, wherein the heat pump arrangement 10 is arranged in fluid connection with the heat storage device 20. The method step of heating s110 may comprise: controlling the heat pump arrangement 10 for heating of the fluid. The heat pump arrangement 10 may be configured as the heat pump arrangement 10 as previously described herein. According to an example, the controlling of the heat pump arrangement 10 may comprise heating of the fluid so that outgoing fluid from the heat pump arrangement 10 has an outgoing temperature T_{Out} of at least 55°C. According to an example, an ingoing temperature T_{In} of ingoing fluid to the heat pump arrangement 10 subtracted from the heat storage device 20 is at least 20°C lower than the outgoing temperature T_{Out} of the outgoing fluid from the heat pump arrangement 10. The heating arrangement may comprise an electric heater arrangement 60. The heating s110 may comprise: controlling the electric heater arrangement 60 for heating of the fluid.

The method step of regulating s120, in the mixing arrangement 30, may comprise regulating a mix of top section fluid received from the heat storage device 20 and midsection fluid received from the heat storage device 20 and returning fluid received from the heating distribution system 40.

The method step of controlling s130 of the return of the returning fluid from the heating distribution system 40 to the heat storage device 20 may comprise controlling the fluid flow through the heating distribution system 40 and/or withdrawing at least a part of the returning fluid back to the mixing arrangement 30. The fluid flow through the heating distribution system 40 may be controlled by adjusting the speed of the circulation pump 32. The withdrawing of at least a part of the returning fluid back to the mixing arrangement 30 may be controlled by regulating the valve position in the mixing valve 31.

The method step of controlling s130 may comprise: increasing the fluid flow through the heat distribution system 40 when the returning fluid has a temperature value less or equal to a first threshold value; and/or decreasing the fluid flow through the heat distribution system 40 when the returning fluid has a temperature value above the first threshold value; and/or withdrawing at least a part of the returning fluid back to the mixing arrangement 30 when the returning fluid has a temperature value above a second threshold value, and/or full recirculation of the returning fluid back to the mixing arrangement 30 when the returning fluid has a temperature value above a third threshold value.

Figure 4 illustrates a computer program product comprising a non-transitory computer readable medium 505 comprising instructions. According to an example of the present disclosure, the computer, i.e. the control device 100 depicted with reference to Figure 1 and Figure 2, may in a version comprise the computer program product. The computer program product comprising a non-transitory computer-readable medium 505, wherein the non-transitory computer readable medium 505 has stored there on a computer program P comprising program instructions. The computer program P is configured to be loadable into a data-processing unit 500, corresponding to the control device 100, comprising a processor 530 and a memory 520 associated with or integral to the data-processing unit 500. When loaded into the data-processing unit 500, the computer program P is configured to be stored in the memory 520, wherein the computer program P, when loaded into and run by the processor 530 is configured to cause the processor to execute method steps according to the method described in conjunction with the figure 3.

Thus, according to an aspect of the present disclosure, a computer program P comprising instructions which, when the program is executed by a computer 100; 500, causes the computer 100; 500 to perform the method as disclosed above is provided. The computer program P is schematically illustrated in Figures 1, 2 and 4. According another aspect of the present disclosure, a computer-readable medium comprising instructions, which when executed by a computer 100; 500, cause the computer 100; 500 to carry out the method as disclosed herein is provided.

In Figure 1 and Figure 2, the control device 100 for controlling a heating system 1 configured to be connected to a heating distribution system 40 of a building is schematically illustrated. The control device 100 may be configured to perform the method as disclosed herein. It is to be understood that the control device 100 may be implemented as a separate entity or distributed in two or more physical entities. The control device 100 may comprise one or more control units and/or computers.

## Claims

1. A heating system (1) configured to be connected to a heating distribution system (40) of a building,
the heating system (1) comprising:
a heat pump arrangement (10) configured to heat a fluid;
a stratified heat storage device (20) configured to store the fluid at differentiated temperatures, wherein the heat storage device (20) is arranged in fluid connection with the heat pump arrangement (10);
a mixing arrangement (30) arranged in fluid connection with the heat storage device (20) and the heating distribution system (40); and
a control device (100) for controlling the heating system (1);
wherein the heat pump arrangement (10) is configured to supply outgoing fluid to the heat storage device (20) and to subtract ingoing fluid from the heat storage device (20), and the heat storage device (20) is configured to supply fluid via the mixing arrangement (30) to the heating distribution system (40) and to receive returning fluid from the heating distribution system (40),
wherein the mixing arrangement (30) is configured to subtract fluid from the heat storage device (20) and to regulate the temperature of the fluid entering the heat distribution system (40),
wherein the heat pump arrangement (10) is configured to supply the outgoing fluid to the heat storage device (20) at an outgoing temperature (T_{Out}) of at least 55°C,
wherein an ingoing temperature (T_{In}) of the ingoing fluid subtracted from the heat storage device (20) by the heat pump arrangement (10) is at least 20°C lower than the outgoing temperature (T_{Out}) of the outgoing fluid from the heat pump arrangement (10),
the heating system (10) further comprises a bypass arrangement (50) for bypassing the heat storage device (20) during start up of the heat pump arrangement (10),
**characterized in that** $
the mixing arrangement is configured to control the return of the returning fluid from the heating distribution system based on temperature values of the returning fluid provided by a returning fluid temperature sensor arranged downstream the heating distribution system, in order to ensure that the temperature difference within the heat storage device is at least 10°C, $
and **in that** the heat storage device comprises at least one stratifier inlet device (22) for distribution of returning fluid from the heating distribution system (40) within the heat storage device (20).

2. The heating system (1) according to claim 1, wherein the heat storage device (20) comprises at least one storage container (21), the storage container (21) extending longitudinally between a top end (23) and a bottom end (24), wherein the top end (23) comprises at least one top inlet opening (25) for outgoing fluid from the heat pump arrangement (10) and at least one top outlet opening (27) for top section fluid supplied to the mixing arrangement (30), wherein the bottom end (24) comprises at least one bottom inlet opening (28) for returning fluid from the heating distribution system (40) and at least one bottom outlet opening (26) for ingoing fluid subtracted by the heat pump arrangement (10), wherein an intermediate portion (29) of the storage container (21) arranged between the top end (23) and the bottom end (24) comprises at least one middle outlet opening (63) for midsection fluid subtracted by the mixing arrangement (30).

3. The heating system (1) according to any one of the preceding claims, wherein the heat storage device (20) further comprises an electrical heater arrangement (60).

4. A computer-implemented method, performed by a control device (100), for controlling the heating system (1) of claim 1,
wherein the method comprises the steps of
heating (s110) of a fluid by the heating arrangement and storing of the fluid at differentiated temperatures in the stratified heat storage device (20);
regulating (s120), in the mixing arrangement (30), the temperature of the fluid subtracted from the heat storage device (20) and entering the heating distribution system (40);
controlling (s130), using the mixing arrangement (30), the return of the returning fluid from the heating distribution system (40) to the heat storage device (20) based on temperature values of the returning fluid provided by a returning fluid temperature sensor arranged downstream of the heating distribution system, to ensure that the temperature difference within the heat storage device (20) is at least 10°C.

5. The method according to claim 4, wherein the heating arrangement comprises a heat pump arrangement (10), wherein the heat pump arrangement (10) is arranged in fluid connection with the heat storage device (20),
the heating (s110) comprises:
controlling the heat pump arrangement (10) for heating of the fluid.

6. The method according to claim 5, wherein the controlling of the heat pump arrangement (10) comprises heating of the fluid so that outgoing fluid from the heat pump arrangement (10) has an outgoing temperature (Tout) of at least 55°C.

7. The method according to any one of the claims 4 to 6, wherein the heating arrangement comprises an electric heater arrangement (60),
the heating (s110) comprises:
controlling the electric heater arrangement (60) for heating of the fluid.

8. The method according to any one of the claims 4 to 7, wherein the regulating (s120), in the mixing arrangement (30), comprises regulating a mix of top section fluid received from the heat storage device (20) and midsection fluid received from the heat storage device (20) and returning fluid received from the heating distribution system (40).

9. The method according to any one of the claims 4 to 8, wherein the controlling (s130) of the return of the returning fluid from the heating distribution system (40) to the heat storage device (20) comprises controlling the fluid flow through the heating distribution system (40) and/or withdrawing at least a part of the returning fluid back to the mixing arrangement (30).

10. The method according to claim 9, wherein the controlling (s130) comprises:
- increasing the fluid flow through the heat distribution system (40) when the returning fluid has a temperature value less or equal to a first threshold value; and/or
- decreasing the fluid flow through the heat distribution system (40) when the returning fluid has a temperature value above the first threshold value; and/or
- withdrawing at least a part of the returning fluid back to the mixing arrangement (30) when the returning fluid has a temperature value above a second threshold value, and/or
- full recirculation of the returning fluid back to the mixing arrangement (30) when the returning fluid has a temperature value above a third threshold value.

11. A computer program (P) comprising instructions which, when the computer program (P) is executed by a computer (100; 500), cause the computer (100; 500) to carry out the method according to any one of the claims 4-10.

12. A computer-readable medium comprising instructions, which when executed by a computer (100; 500), cause the computer (100; 500) to carry out the method according to any one of the claims 4-10.

13. A control device (100) for controlling a heating system (1) configured to be connected to a heating distribution system (40) of a building, wherein the control device (100) is configured to perform the method according to any of the claims 4-10.

## Patentansprüche

1. Heizsystem (1), das dazu konfiguriert ist, mit einem Heizverteilungssystem (40) eines Gebäudes verbunden zu sein,
wobei das Heizsystem (1) Folgendes umfasst:
eine Wärmepumpenanordnung (10), die dazu konfiguriert ist, ein Fluid zu erwärmen;
eine Wärme-Schichtenspeichervorrichtung (20), die dazu konfiguriert ist, das Fluid bei unterschiedlichen Temperaturen zu speichern, wobei die Wärmespeichervorrichtung (20) in Fluidverbindung mit der Wärmepumpenanordnung (10) angeordnet ist;
eine Mischanordnung (30), die in Fluidverbindung mit der Wärmespeichervorrichtung (20) und dem Heizverteilungssystem (40) angeordnet ist; und
eine Steuervorrichtung (100) zum Steuern des Heizsystems (1);
wobei die Wärmepumpenanordnung (10) dazu konfiguriert ist, der Wärmespeichervorrichtung (20) abgehendes Fluid zuzuführen und eingehendes Fluid aus der Wärmespeichervorrichtung (20) zu subtrahieren, und die Wärmespeichervorrichtung (20) dazu konfiguriert ist, dem Heizverteilungssystem (40) Fluid über die Mischanordnung (30) zuzuführen und rückgeführtes Fluid aus dem Heizverteilungssystem (40) aufzunehmen,
wobei die Mischanordnung (30) dazu konfiguriert ist, Fluid aus der Wärmespeichervorrichtung (20) zu subtrahieren und die Temperatur des Fluids, das in das Wärmeverteilungssystem (40) eintritt, zu regulieren,
wobei die Wärmepumpenanordnung (10) dazu konfiguriert ist, der Wärmespeichervorrichtung (20) das abgehende Fluid bei einer Abgangstemperatur (T_{Out}) von mindestens 55 °C zuzuführen,
wobei eine Eingangstemperatur (T_{In}) des eingehenden Fluids, das aus der Wärmespeichervorrichtung (20) durch die Wärmepumpenanordnung (10) subtrahiert wird, mindestens 20 °C niedriger als die Abgangstemperatur (T_{Out}) des abgehenden Fluids aus der Wärmepumpenanordnung (10) ist,
wobei das Heizsystem (10) ferner eine Umgehungsanordnung (50) zum Umgehen der Wärmespeichervorrichtung (20) während eines Startens der Wärmepumpenanordnung (10) umfasst,
**dadurch gekennzeichnet,**
**dass** die Mischanordnung dazu konfiguriert ist, die Rückführung des rückgeführten Fluids aus dem Heizverteilungssystem auf Grundlage von Temperaturwerten des rückgeführten Fluids zu steuern, die durch einen stromabwärts des Heizverteilungssystems angeordneten Temperatursensor für rückgeführtes Fluid bereitgestellt werden, um sicherzustellen, dass die Temperaturdifferenz innerhalb der Wärmespeichervorrichtung mindestens 10 °C beträgt,
und dadurch, dass die Wärmespeichervorrichtung mindestens eine Schichtungseinlassvorrichtung (22) zur Verteilung von rückgeführtem Fluid aus dem Heizverteilungssystem (40) innerhalb der Wärmespeichervorrichtung (20) umfasst.

2. Heizsystem (1) nach Anspruch 1, wobei die Wärmespeichervorrichtung (20) mindestens einen Speicherbehälter (21) umfasst, wobei sich der Speicherbehälter (21) in Längsrichtung zwischen einem oberen Ende (23) und einem unteren Ende (24) erstreckt, wobei das obere Ende (23) mindestens eine obere Einlassöffnung (25) für abgehendes Fluid aus der Wärmepumpenanordnung (10) und mindestens eine obere Auslassöffnung (27) für der Mischanordnung (30) zugeführtes Fluid des oberen Abschnitts umfasst, wobei das untere Ende (24) mindestens eine untere Einlassöffnung (28) für rückgeführtes Fluid aus dem Heizverteilungssystem (40) und mindestens eine untere Auslassöffnung (26) für eingehendes Fluid, das durch die Wärmepumpenanordnung (10) subtrahiert wird, umfasst, wobei ein Zwischenabschnitt (29) des Speicherbehälters (21), der zwischen dem oberen Ende (23) und dem unteren Ende (24) angeordnet ist, mindestens eine mittlere Auslassöffnung (63) für Fluid des mittleren Abschnitts umfasst, das durch die Mischanordnung (30) subtrahiert wird.

3. Heizsystem (1) nach einem der vorhergehenden Ansprüche, wobei die Wärmespeichervorrichtung (20) ferner eine elektrische Heizungsanordnung (60) umfasst.

4. Computerimplementiertes Verfahren, das durch eine Steuervorrichtung (100) durchgeführt wird, zum Steuern des Heizsystems (1) nach Anspruch 1, wobei das Verfahren die folgenden Schritte umfasst:
Erwärmen (s110) eines Fluids durch die Heizanordnung und Speichern des Fluids bei unterschiedlichen Temperaturen in der Wärme-Schichtenspeichervorrichtung (20);
Regulieren (s120), in der Mischanordnung (30), der Temperatur des Fluids, das aus der Wärmespeichervorrichtung (20) subtrahiert wird und in das Heizverteilungssystem (40) eintritt;
Steuern (s130), unter Verwendung der Mischanordnung (30), der Rückführung des rückgeführten Fluids aus dem Heizverteilungssystem (40) zu der Wärmespeichervorrichtung (20) auf Grundlage von Temperaturwerten des rückgeführten Fluids, die durch einen stromabwärts des Heizverteilungssystems angeordneten Temperatursensor für rückgeführtes Fluid bereitgestellt werden, um sicherzustellen, dass die Temperaturdifferenz innerhalb der Wärmespeichervorrichtung (20) mindestens 10 °C beträgt.

5. Verfahren nach Anspruch 4, wobei die Heizanordnung eine Wärmepumpenanordnung (10) umfasst, wobei die Wärmepumpenanordnung (10) in Fluidverbindung mit der Wärmespeichervorrichtung (20) angeordnet ist,
wobei das Erwärmen (s110) Folgendes umfasst:
Steuern der Wärmepumpenanordnung (10) zum Erwärmen des Fluids.

6. Verfahren nach Anspruch 5, wobei das Steuern der Wärmepumpenanordnung (10) Erwärmen des Fluids umfasst, sodass abgehendes Fluid aus der Wärmepumpenanordnung (10) eine Abgangstemperatur (T_{Out}) von mindestens 55 °C aufweist.

7. Verfahren nach einem der Ansprüche 4 bis 6, wobei die Heizanordnung eine elektrische Heizungsanordnung (60) umfasst,
wobei das Erwärmen (s110) Folgendes umfasst:
Steuern der elektrischen Heizungsanordnung (60) zum Erwärmen des Fluids.

8. Verfahren nach einem der Ansprüche 4 bis 7, wobei das Regulieren (s120) in der Mischanordnung (30) Regulieren einer Mischung aus Fluid des oberen Abschnitts, das aus der Wärmespeichervorrichtung (20) aufgenommen wird, und Fluid des mittleren Abschnitts, das aus der Wärmespeichervorrichtung (20) aufgenommen wird, und rückgeführtem Fluid, das aus dem Heizverteilungssystem (40) aufgenommen wird, umfasst.

9. Verfahren nach einem der Ansprüche 4 bis 8, wobei das Steuern (s130) der Rückführung des rückgeführten Fluids aus dem Heizverteilungssystem (40) zu der Wärmespeichervorrichtung (20) Steuern des Fluidstroms durch das Heizverteilungssystem (40) und/oder Zurückziehen mindestens eines Teils des rückgeführten Fluids zurück zu der Mischanordnung (30) umfasst.

10. Verfahren nach Anspruch 9, wobei das Steuern (s130) Folgendes umfasst:
- Erhöhen des Fluidstroms durch das Wärmeverteilungssystem (40), wenn das rückgeführte Fluid einen Temperaturwert aufweist, der kleiner als ein erster Schwellenwert oder gleich diesem ist; und/oder
- Verringern des Fluidstroms durch das Wärmeverteilungssystem (40), wenn das rückgeführte Fluid einen Temperaturwert über dem ersten Schwellenwert aufweist; und/oder
- Zurückziehen mindestens eines Teils des rückgeführten Fluids zurück zu der Mischanordnung (30), wenn das rückgeführte Fluid einen Temperaturwert über einem zweiten Schwellenwert aufweist, und/oder
- vollständige Rezirkulation des rückgeführten Fluids zurück zu der Mischanordnung (30), wenn das rückgeführte Fluid einen Temperaturwert über einem dritten Schwellenwert aufweist.

11. Computerprogramm (P), umfassend Anweisungen, die, wenn das Computerprogramm (P) von einem Computer (100; 500) ausgeführt wird, den Computer (100; 500) dazu veranlassen, das Verfahren nach einem der Ansprüche 4-10 auszuführen.

12. Computerlesbares Medium, umfassend Anweisungen, die, wenn sie von einem Computer (100; 500) ausgeführt werden, den Computer (100; 500) dazu veranlassen, das Verfahren nach einem der Ansprüche 4-10 auszuführen.

13. Steuervorrichtung (100) zum Steuern eines Heizsystems (1), das dazu konfiguriert ist, mit einem Heizverteilungssystem (40) eines Gebäudes verbunden zu sein, wobei die Steuervorrichtung (100) dazu konfiguriert ist, das Verfahren nach einem der Ansprüche 4-10 durchzuführen.

## Revendications

1. Système de chauffage (1) configuré pour être relié à un système de distribution de chauffage (40) d'un bâtiment,
le système de chauffage (1) comprenant :
un agencement de pompe à chaleur (10) configuré pour chauffer un fluide ;
un dispositif de stockage de chaleur stratifié (20) configuré pour stocker le fluide à des températures différenciées, dans lequel le dispositif de stockage de chaleur (20) est agencé en liaison fluidique avec l'agencement de pompe à chaleur (10) ;
un agencement de mélange (30) agencé en liaison fluidique avec le dispositif de stockage de chaleur (20) et le système de distribution de chauffage (40) ; et
un dispositif de commande (100) pour la commande du système de chauffage (1) ;
dans lequel l'agencement de pompe à chaleur (10) est configuré pour fournir un fluide sortant au dispositif de stockage de chaleur (20) et pour soustraire un fluide entrant du dispositif de stockage de chaleur (20), et le dispositif de stockage de chaleur (20) est configuré pour fournir un fluide via l'agencement de mélange (30) au système de distribution de chauffage (40) et pour recevoir un fluide de retour du système de distribution de chauffage (40),
dans lequel l'agencement de mélange (30) est configuré pour soustraire un fluide du dispositif de stockage de chaleur (20) et pour réguler la température du fluide entrant dans le système de distribution de chaleur (40),
dans lequel l'agencement de pompe à chaleur (10) est configuré pour fournir le fluide sortant au dispositif de stockage de chaleur (20) à une température sortante (T_{Out}) d'au moins 55 °C,
dans lequel une température entrante (T_{In}) du fluide entrant soustrait du dispositif de stockage de chaleur (20) par l'agencement de pompe à chaleur (10) est inférieure d'au moins 20 °C à la température sortante (T_{Out}) du fluide sortant de l'agencement de pompe à chaleur (10),
le système de chauffage (10) comprend en outre un agencement de dérivation (50) pour le contournement du dispositif de stockage de chaleur (20) lors du démarrage de l'agencement de pompe à chaleur (10),
**caractérisé en ce que**
l'agencement de mélange est configuré pour commander le retour du fluide de retour depuis le système de distribution de chauffage sur la base de valeurs de température du fluide de retour fournies par un capteur de température de fluide de retour agencé en aval du système de distribution de chauffage, afin de garantir que la différence de température à l'intérieur du dispositif de stockage de chaleur est d'au moins 10 °C,
et **en ce que** le dispositif de stockage de chaleur comprend au moins un dispositif d'entrée de stratification (22) pour la distribution de fluide de retour du système de distribution de chauffage (40) à l'intérieur du dispositif de stockage de chaleur (20).

2. Système de chauffage (1) selon la revendication 1, dans lequel le dispositif de stockage de chaleur (20) comprend au moins un récipient de stockage (21), le récipient de stockage (21) s'étendant longitudinalement entre une extrémité supérieure (23) et une extrémité inférieure (24), dans lequel l'extrémité supérieure (23) comprend au moins une ouverture d'entrée supérieure (25) pour le fluide sortant de l'agencement de pompe à chaleur (10) et au moins une ouverture de sortie supérieure (27) pour un fluide de section supérieure fourni à l'agencement de mélange (30), dans lequel l'extrémité inférieure (24) comprend au moins une ouverture d'entrée inférieure (28) pour le retour de fluide depuis le système de distribution de chauffage (40) et au moins une ouverture de sortie inférieure (26) pour un fluide entrant soustrait par l'agencement de pompe à chaleur (10), dans lequel une partie intermédiaire (29) du récipient de stockage (21) agencée entre l'extrémité supérieure (23) et l'extrémité inférieure (24) comprend au moins une ouverture de sortie centrale (63) pour un fluide de section médiane soustrait par l'agencement de mélange (30).

3. Système de chauffage (1) selon l'une quelconque des revendications précédentes, dans lequel le dispositif de stockage de chaleur (20) comprend en outre un agencement de chauffage électrique (60).

4. Procédé mis en œuvre par ordinateur, exécuté par un dispositif de commande (100), pour commander le système de chauffage (1) selon la revendication 1, dans lequel le procédé comprend les étapes de :
chauffage (s110) d'un fluide par l'agencement de chauffage et stockage du fluide à des températures différenciées dans le dispositif de stockage de chaleur stratifié (20) ;
régulation (s120), dans l'agencement de mélange (30), de la température du fluide soustrait du dispositif de stockage de chaleur (20) et entrant dans le système de distribution de chauffage (40) ;
commande (s130), à l'aide de l'agencement de mélange (30), du retour du fluide de retour du système de distribution de chauffage (40) au dispositif de stockage de chaleur (20) sur la base de valeurs de température du fluide de retour fournies par un capteur de température de fluide de retour agencé en aval du système de distribution de chauffage, pour garantir que la différence de température à l'intérieur du dispositif de stockage de chaleur (20) est d'au moins 10 °C.

5. Procédé selon la revendication 4, dans lequel l'agencement de chauffage comprend un agencement de pompe à chaleur (10), dans lequel l'agencement de pompe à chaleur (10) est agencé en liaison fluidique avec le dispositif de stockage de chaleur (20),
le chauffage (s110) comprend :
la commande de l'agencement de pompe à chaleur (10) pour le chauffage du fluide.

6. Procédé selon la revendication 5, dans lequel la commande de l'agencement de pompe à chaleur (10) comprend le chauffage du fluide de telle sorte qu'un fluide sortant de l'agencement de pompe à chaleur (10) ait une température sortante (Tₒᵤₜ) d'au moins 55 °C.

7. Procédé selon l'une quelconque des revendications 4 à 6, dans lequel l'agencement de chauffage comprend un agencement de chauffage électrique (60),
le chauffage (s110) comprend :
la commande de l'agencement de chauffage électrique (60) pour le chauffage du fluide.

8. Procédé selon l'une quelconque des revendications 4 à 7, dans lequel la régulation (s120), dans l'agencement de mélange (30), comprend la régulation d'un mélange de fluide de section supérieure reçu du dispositif de stockage de chaleur (20) et de fluide de section médiane reçu du dispositif de stockage de chaleur (20) et de fluide de retour reçu du système de distribution de chauffage (40).

9. Procédé selon l'une quelconque des revendications 4 à 8, dans lequel la commande (s130) du retour du fluide de retour du système de distribution de chauffage (40) vers le dispositif de stockage de chaleur (20) comprend la commande du débit de fluide à travers le système de distribution de chauffage (40) et/ou le retrait d'au moins une partie du fluide de retour vers l'agencement de mélange (30).

10. Procédé selon la revendication 9, dans lequel la commande (s130) comprend :
- l'augmentation du débit de fluide à travers le système de distribution de chaleur (40) lorsque le fluide de retour a une valeur de température inférieure ou égale à une première valeur seuil ; et/ou
- la diminution du débit de fluide à travers le système de distribution de chaleur (40) lorsque le fluide de retour a une valeur de température supérieure à la première valeur seuil ; et/ou
- le retrait d'au moins une partie du fluide de retour vers l'agencement de mélange (30) lorsque le fluide de retour a une valeur de température supérieure à une seconde valeur seuil, et/ou
- la recirculation complète du fluide de retour vers l'agencement de mélange (30) lorsque le fluide de retour a une valeur de température supérieure à une troisième valeur seuil.

11. Programme informatique (P) comprenant des instructions qui, lorsque le programme informatique (P) est exécuté par un ordinateur (100 ; 500), amènent l'ordinateur (100 ; 500) à effectuer le procédé selon l'une quelconque des revendications 4 à 10.

12. Support lisible par ordinateur comprenant des instructions qui, lorsqu'elles sont exécutées par un ordinateur (100 ; 500), amènent l'ordinateur (100 ; 500) à effectuer le procédé selon l'une quelconque des revendications 4 à 10.

13. Dispositif de commande (100) pour la commande d'un système de chauffage (1) configuré pour être relié à un système de distribution de chauffage (40) d'un bâtiment, dans lequel le dispositif de commande (100) est configuré pour effectuer le procédé selon l'une quelconque des revendications 4 à 10.
